# EUROPEAN PATENT SPECIFICATION

(11) **EP 2 412 995 B1**
(45) Date of publication and mention of the grant of the patent: **12.12.2012**
(21) Application number: 10400034.4
(22) Date of filing: 30.07.2010
(51) Int. Cl.: F16C 27/04, F16C 35/073, F16C 37/00, B64C 27/12

(54) **Drive train**
Triebstrang
Ensemble de transmission

(43) Date of publication of application: 01.02.2012
(73) Proprietor: Eurocopter Deutschland GmbH, 86609 Donauwörth (DE)
(72) Inventor: Doleschel, Andreas, Dr., 85653 Grosshelfendorf (DE); Heider, Patrick, 86692 Münster (DE)
(74) Representative: GPI & Associés

(56) References cited:
- DE-A1- 1 400 303
- DE-A1- 2 744 918
- DE-T2-602005 005 174
- US-A- 3 129 904
- US-A- 3 306 680
- US-A- 3 645 593

## Description

The invention refers to a drive train for a tail rotor of a helicopter with a rolling bearing for a shaft with the features of the preamble of claim 1.

Such a drive train is known from US 3 129 904.

In the present application the term shaft comprises as well rods, axles or similar elements effecting rotating movements relative to the assigned rolling bearing. For the sake of simplicity the term bearing is used as synonym to bearing arrangement.

In the technical field of aircrafts shafts are of decisive importance for the ability of an aircraft to fly. The respective supports of the shafts have to be up to the needs for safe operation. Usually shafts are supported by a plurality of bearings arranged at different positions along the shafts. It is known to use plain-, ball- or rolling bearings for the support of rotating shafts in many industrial applications such as machine tools, motorized lathes or in vehicles of all kind.

In bearings of the a. m. type waste heat is created through friction during operation of the shaft resulting in higher temperatures of the various constructive elements of the bearings. Some operational conditions may create high temperatures as a consequence of frictional losses to levels not allowed anymore for the materials of the elements of the bearings resulting in wear and reduced operational ability. These operational conditions are particularly critical if maintained over an extended range of time. Consequences may reach from failure to complete destruction of bearing components with serious implications for the operational safety of a vehicle to which this bearing component is applied.

To keep a stipulated operational temperature in an allowable range for an element of a bearing is therefore of high relevance, its operational safety being of particular relevance for aircrafts.

Depending from the technical field various attempts have been made to solve the a. m. problem. Courant solutions propose to rinse the bearing and/or its components with a cooling liquid to keep the temperature of the bearing and its components at a constant level during operation.

For example the document DE 27 44 918 C2 provides for a cooling device with a heat dissipating liquid for machine elements, particularly for shafts and shaft bearings, with a cooling effect, i. e. the amount of heat that can be dissipated, through vaporisation of the cooling liquid.

The document DE 60 2005 005 174 T2 describes a machine with an improved lubrication for a bearing with lubrication channels in the casing of the bearing for supply and drain of oil to and from the bearing as well as cooling channels for supply and drain of a cooling agent, the cooling channels being connected to the lubrication channels.

The document DE 1400 303 describes a bearing with an attempt to suppress heat conduction from a shaft into a bearing by using a socket fixed onto the supported shaft and being provided with an inner bearing ring. The socket is provided with gaps such that a cross section of the socket in radial direction is reduced from inside to outside in the area of the gaps. The narrowed cross section is supposed to prevent as far as possible any heat conduction within the socket.

Creation of energy inside the bearings is a consequence of rolling- and skid-friction caused by the movements inside the bearing. Such energy may be drained through heat convection. Such heat convection is hampered by small surfaces and obstruction of heat transfer as this is the case at the interface of inner ring of the bearing and socket mounted on the shaft. As a consequence critical temperatures outside a predetermined temperature range are most likely to exist at the interface of inner ring of the bearing and socket mounted on the shaft such temperatures not being allowed for any lubricating material inside the bearing or the material of the socket. Reduction of lubricating material inside the bearing or the use of different rolling elements, e. g. made of ceramics did not prove to be sufficient for reliable avoidance of critical temperatures outside a predetermined temperature range.

The a. m. solutions for the reduction of temperatures of bearings for shafts have disadvantages. The applied - generally liquid - cooling agents, as for example oil or water, have to be stored or carried in supplemental containers. Further additional constructive components have to be provided and integrated into the existing bearings to take the cooling agents to the components and to the areas of the bearings to be cooled and to drain these cooling agents again. On top the used cooling agent has to be recycled in suitable devices to fulfil its cooling function. The provision of components for the installation of cooling circuits, particularly for bearings, requests important technical expenditure being particularly high for terrestrial, nautical or aerial vehicles due to the usually very limited available space. Machines with installed cooling systems need regular maintenance for proper cooling of bearings and machine elements the machines being operational only partly or not at all during this maintenance.

US 3 306 680 A discloses a system comprising a supporting structure with at least two bearings and a curved flexible shaft, each of said bearings comprising two bearing portions and resilient means for interconnecting said bearing portions providing a force opposed to the load supported in operation. US 3 306 680 A is silent about any stipulated operational temperature in an allowable range.

Therefore it is an object of the invention to provide a rolling bearing for a shaft keeping a stipulated operational temperature in an allowable range without the disadvantages of the state of the art or at least reducing such disadvantages. It is a further object of the invention to provide a cost efficient bearing that is simple to install.

A solution is provided with a rolling bearing with the features of claim 1. Preferred embodiments of the invention are provided in the subclaims.

According to the invention a drive train, particularly a drive train towards a tail rotor of a helicopter, is equipped with a rolling bearing for a shaft, said rolling bearing comprising a fixed outer ring, an inner ring rotating relative to said outer ring and at least one intermediate socket mounted coaxially on the shaft inside the inner ring. According to the invention at least one coaxial shell is provided between the socket and the inner ring, said shell being provided with a cylindrical outer area of contact to an inner circumferential surface of the inner ring. The shell is provided with at least one lateral extension beyond the area of contact with the inner ring and the shell is made of metal. The shell has preferably a large area of contact with the inner ring for optimized heat transport from the inner ring to the shell and from there to the at least one extension for dissipation of the heat from the inner ring via the free surface of the extension to the surrounding atmosphere such heat resulting from friction between the components of the rolling bearing supporting the rotating shaft. While the inner ring of the rolling bearing has a relatively small inner surface with almost no free areas for heat dissipation as such, the arrangement of the shell according to the invention with the extensions adjacent to the inner ring of the rolling bearing provides extra surfaces for dissipation of heat from said inner ring and consequently contributes to maintaining the temperature at the socket and particularly the inner ring of the rolling bearing in a predetermined range suitable for operation and thus improves the reliability of the rolling bearing and the inventive drive train as a whole. Investments into cooling components and/or cooling agents can be avoided. The inventive principle is to increase the area for convection of the rolling bearing in order to drain energy from the inner ring of the bearing to the surrounding atmosphere, i. e. air thus reducing the temperature differences from inner to outer ring of the rolling bearing resulting from heating up of said bearing during operation.

According to a preferred embodiment of the invention the at least one coaxial shell is provided with outwardly projecting abutment means and/or a snap ring in a radial outer notch of the respective shell, said abutment means and/or snap ring on the respective shell being positioned to hold the respective shell axially relative to its rolling bearing.

According to a further preferred embodiment of the invention the at least one intermediate socket is provided with at least one radial projection towards the shell and the shell is provided with at least one radial groove located fittingly to said at least one radial projection of the socket in order to keep the socket in its axial position relative to said shell.

According to a further preferred embodiment of the invention the at least one shell is provided with lateral extensions beyond either sides of the inner ring for improved cooling conditions at the inner ring of the rolling bearing.

According to a further preferred embodiment of the invention the socket is made of resilient material for attenuated support of the shaft in the rolling bearing at low constructive expense.

According to a further preferred embodiment of the invention the at least one lateral extension of said shell is profiled for an increased surface with consequently increased heat dissipation during operation for lower temperatures at the inner ring and improved reliability of the rolling bearing.

According to a further preferred embodiment of the invention at least one part of the shell is made of a material with a high coefficient of heat conduct improving heat transfer from the inner ring to the shell and from there to the extensions with the free surfaces of the shell.

According to a further preferred embodiment of the invention the at least one shell is provided with wings increasing first of all the overall surface of the extensions and additionally imposing active convection through creation of air vortices imposed by the rotation of the shell with the shaft for further improved heat dissipation through augmented drain of the heat from the components of the bearing.

According to a further preferred embodiment of the invention the at least one shell is made of metal, i. e. aluminium, copper or brass and thus from a comparatively soft material relative to a steel shaft. In case of a failure such a shell would not present any risk to the integrity of the steel shaft.

Some preferred embodiments of the invention are presented in the following description with reference to the accompanying drawings.
Fig. 1 shows a support for a tail rotor drive shaft of a helicopter with groove ball bearings according to the state of the art,
Fig. 2 shows one of the groove ball bearings of Fig. 1,
Fig. 3 shows a perspective view of a rolling bearing according to the invention,
Fig. 4 shows a cross sectional view of the rolling bearing of Fig. 3,
Fig. 5a, 5b, 5c show one of the components of Fig. 4, and
Fig. 6 shows a perspective view of a preferred embodiment of a rolling bearing according to the invention.

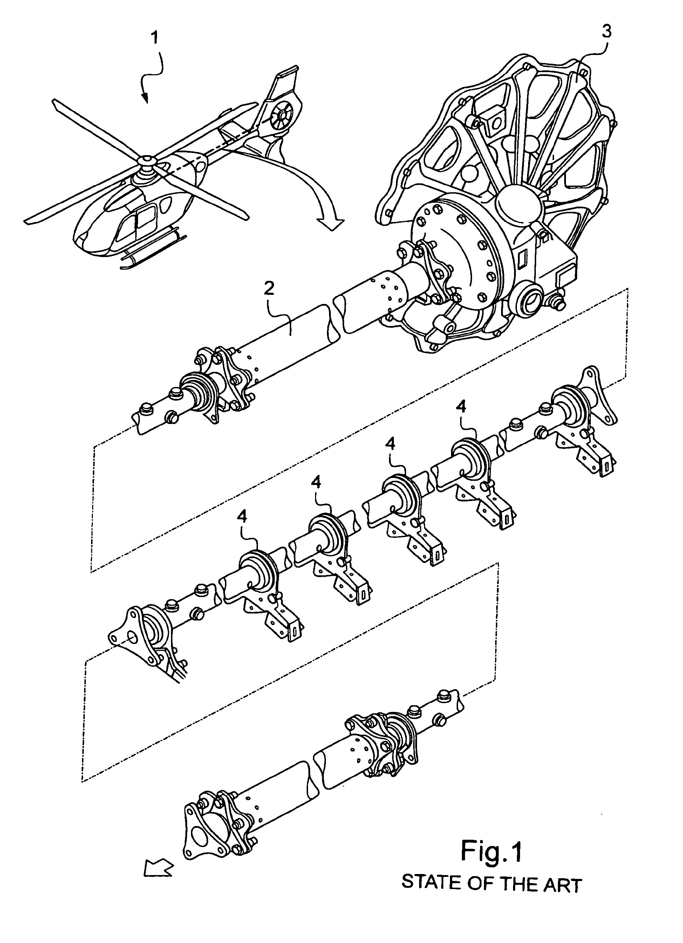

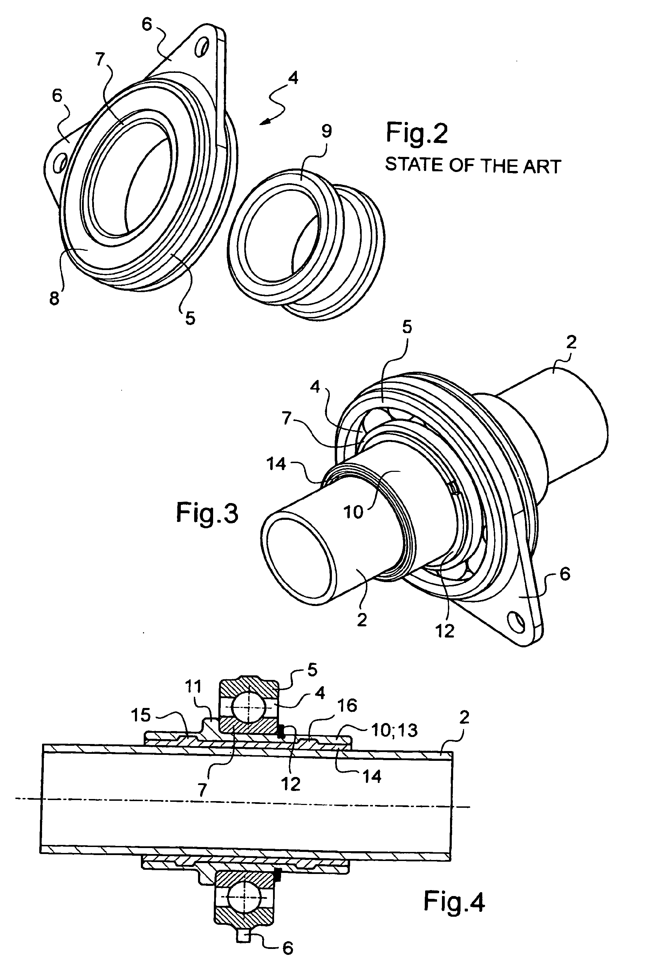

According to fig. 1, 2 a drive train of a helicopter 1 is provided with a drive shaft 2 to a tail rotor 3 said drive shaft 2 being supported in six distant rolling bearings 4, e. g. groove ball bearings. The rotational speed of the shaft 2 is about 5000/min during operation of the helicopter 1. The shaft 2 is made of steel at the passages through the bearings 4.

The groove ball bearings 4 each comprise a fixed outer ring 5 with flanges 6 and an inner ring 7 rotating with the shaft 2. Each of the bearings 4 are fixed via the flanges 6 to a fuselage of the helicopter 1. Rolling balls (not shown) of the bearings 4 are accommodated in a riveted casing between the outer ring 5 and the inner ring 7 of the bearing 4. Lubrication inside the bearings 4 is withheld by two lateral sealing rings 8 between the outer ring 5 and the inner ring 7. An elastic socket 9, particularly a rubber socket made of hydrogenated nitrile butadiene rubber (HNBR), is mounted coaxially on the shaft 2 and arranged radial inside the inner ring 7 for support of the respective bearing 4, said socket 9 being provided on either side with radial extending shoulders applying from outside laterally against the inner ring 7 to hold said socket 9 in an axial position on the drive shaft 2. The elastic socket 9 allows absorption of transversal oscillations of the operational shaft 2 without transfer to the bearing 4 and the elastic socket 9 allows to even out relative movements of the bearing 4.

According to fig. 3 and 4 corresponding features have the same references as in Fig. 1, 2. The metallic drive shaft 2 is supported in one of a plurality of the rolling bearings 4.

The groove ball bearings 4 each comprise the fixed outer ring 5 with flanges 6 and the inner ring 7 rotating with the shaft 2. A shell 10 with a cylindrical outer area of contact is mounted to an inner circumferential surface inside the inner ring 7 of the bearing 4 coaxially with respect to the shaft 2. The cylindrical shell 10 is suitably press fitted or adhesively fitted with its cylindrical outer area to the inner surface of the inner ring 7. A radial outside abutment shoulder 11 of the shell 10 and a snap ring 12 in a radial outer notch of the shell 10 are positioned with a distance between each other corresponding to the width of the inner ring 7 to hold the respective shell 10 axially relative to its groove ball bearing 4.

Coaxial extensions 13 of the shell 10 are provided on either side of the bearing 4 with these extensions 13 being laterally outside the inner ring 7 of the bearing 4 and radial distant from the shaft 2. The shell 10 with the coaxial extensions 13 is made of metal, i. e. aluminium, copper, brass or the like with suitable properties for passive convection, i. e. good heat conduct properties.

An elastic socket 14 is mounted on the shaft 2 radial inside of each of the shells 10, particularly a rubber socket made of HNBR for support of the respective shell 10. Said elastic socket 14 is provided with two radial circumferential projections 15, 16 and the shell 10 is provided with two correspondingly radial circumferential grooves located fittingly relative to said two radial circumferential projections 15, 16 of the socket 14 to hold said socket 14 in its axial position relative to its respective bearing 4 on the drive shaft 2. The socket 14 may be cured in support to the inner surface of shell 10.

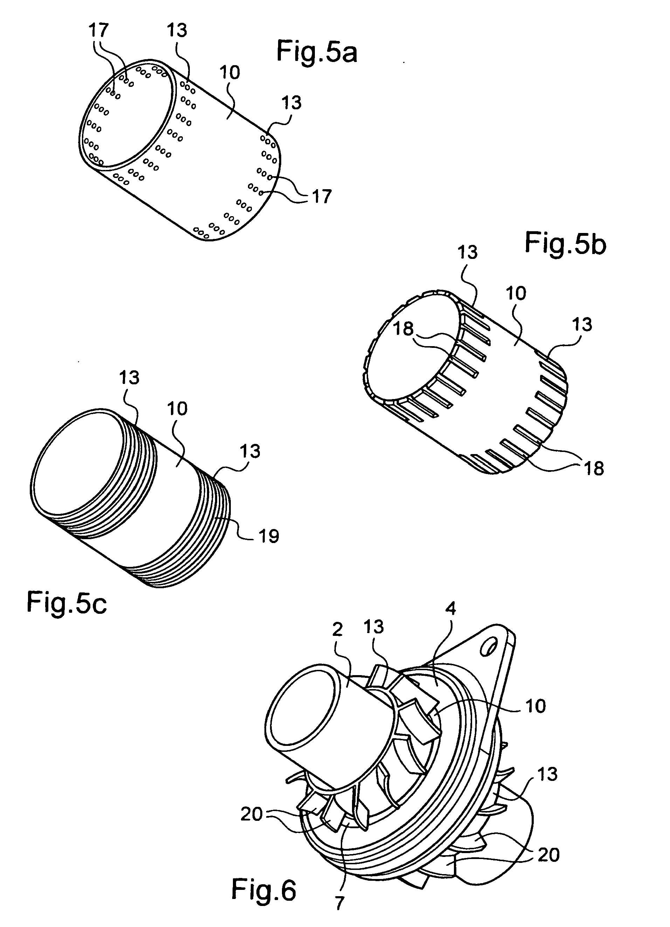

According to fig. 5a, 5b, 5c corresponding features have the same references as in Fig. 1 to 4. Increased surfaces of the extensions 13 of shell 10 for improved heat dissipation are provided by profiles. Such profiles of the extensions 13 are radial through holes 17 (Fig. 5a), in an axial direction equidistantly distributed circumferential grooves 18 (Fig. 5b) or in a radial direction equidistantly distributed and axially parallel grooves 19 (Fig. 5c) on outer surfaces of the extensions 13 on either side of the shell 10. The profiled surfaces 17, 18, 19 according to Fig. 5a, 5b, 5c cause variations of the air layers next to the surface of the extensions 13 with consequent vortices for supplemental active convection for improved heat dissipation.

According to fig. 6 corresponding features have the same references as in Fig. 1 to 5. The extensions 13 of the shell 10 are provided with vanes 20 extending radial outside to cool the inner ring 7 of the bearing 4 with supplemental active convection imposed by the rotation of the shell 10 with the shaft 2 for improved heat dissipation towards the surrounding atmosphere.

## Claims

1. A drive train for a tail rotor of a helicopter, comprising at least one rolling bearing (4) coaxially supporting a shaft (2) and keeping a stipulated operational temperature in an allowable range with a fixed outer ring (5), an inner ring (7) rotating relative to said outer ring (5) and at least one intermediate socket (14) mounted coaxially on the shaft (2) inside the inner ring (7),
wherein at least one coaxial shell (10) is provided between the socket (14) and the inner ring (7), said shell (10) being provided with
a cylindrical outer area of contact to an inner circumferential surface of the inner ring (7) and
at least one lateral extension (13) beyond the area of contact with the inner ring (7), said shell (10) being made of metal, i. e. aluminium, copper, brass.

2. A drive train according to claim 1,
**characterized in that** the at least one coaxial shell (10) is provided with abutment means (11) and/or a snap ring (12) in a radial outer notch of the respective shell (10), said abutment means (11) and/or a snap ring (12) being positioned to hold the respective shell (10) axially relative to its rolling bearing (4).

3. A drive train according to claim 2,
**characterized in that** the at least one intermediate socket (14) is provided with a support for said shell (10) and **in that** the at least one lateral extension (13) reaches beyond the area of contact with the socket (14).

4. A drive train according to claim 1,
**characterized in that** the at least one shell (10) is provided with lateral extensions (13) to either sides of the inner ring (7).

5. A drive train according to claim 1,
**characterized in that** the socket (14) is made of resilient material to even out relative movements of the bearing (4).

6. A drive train according to claim 1,
**characterized in that** the at least one lateral extension (13) of said shell is profiled for an increased outer surface.

7. A drive train according to claim 6,
**characterized in that** the at least one shell (10) is provided with vanes (20).

## Patentansprüche

1. Antriebsstrang für den Heckrotor eines Helikopters mit mindestens einem eine Welle (2) koaxial stützenden Wälzlager (4) und unter Beibehaltung einer festgelegten Betriebstemperatur in einem erlaubten Bereich mit einem feststehenden Außenring (5), einem sich relativ zum besagten Außenring (5) drehenden Innenring (7) und mindestens einer, koaxial auf die Welle (2) montierten und innen im Innenring (7) befindlichen Zwischenhülse (14),
wobei mindestens eine koaxiale Hülse (10) zwischen der Zwischenhülse (14) und dem Innenring (7) vorgesehen ist und die besagte Hülse (10)
eine zylindrische äußere Kontaktfläche zur Innenumfangsoberfläche des Innenringes (7) und
mindestens eine, aus der Kontaktfläche mit dem Innenring (7) herausragende seitliche Erweiterung (13) umfasst, wobei die besagte Hülse (10) aus Metall, wie z. B. Aluminium, Kupfer oder Messing besteht.

2. Antriebsstrang nach Anspruch 1,
**dadurch gekennzeichnet, dass** die mindestens eine koaxiale Hülse (10) Anlagemittel (11) und/oder einen in einer radialen äußeren Nut dieser Hülse (10) angeordneten Federring (12) umfasst, wobei die besagten Anlagemittel (11) und/oder ein Federring (12) so positioniert sind, dass sie die jeweilige Hülse (10) in axialer Richtung zum entsprechenden Wälzlager (4) in Position halten.

3. Antriebsstrang nach Anspruch 2,
**dadurch gekennzeichnet, dass** die mindestens eine Zwischenhülse (14) eine Auflage für die besagte Hülse (10) umfasst und die mindestens eine seitliche Erweiterung (13) über die Kontaktfläche mit der Zwischenhülse (14) hinausragt.

4. Antriebsstrang nach Anspruch 1,
**dadurch gekennzeichnet, dass** die mindestens eine Hülse (10) seitliche Erweiterungen (13) an beiden Seiten des Innenrings (7) aufweist.

5. Antriebsstrang nach Anspruch 1,
**dadurch gekennzeichnet, dass** die Zwischenhülse (14) aus einem elastischen Material besteht, um die relativen Bewegungen des Lagers (4) auszugleichen.

6. Antriebsstrang nach Anspruch 1,
**dadurch gekennzeichnet, dass** die mindestens eine seitliche Erweiterung (13) der besagten Hülse zur Vergrößerung der äußeren Oberfläche vorgesehen ist.

7. Antriebsstrang nach Anspruch 6,
**dadurch gekennzeichnet, dass** die mindestens eine Hülse (10) Luftschaufein (20) umfasst.

## Revendications

1. Ensemble de transmission pour un rotor de queue d'un hélicoptère, comprenant au moins un roulement à rouleaux (4) qui supporte coaxialement un arbre (2), conserve une température de service stipulée dans une gamme admissible et comporte une bague extérieure fixe (5), une bague intérieure (7) tournante par rapport à ladite bague extérieure (5) et au moins une douille intermédiaire (14) montée coaxialement sur l'arbre (2) à l'intérieur de la bague intérieure (7),
dans lequel au moins une cage coaxiale (10) est prévue entre la douille (14) et la bague intérieure (7), ladite cage (10) étant pourvue
d'une surface extérieure cylindrique de contact avec une surface périphérique intérieure de la bague intérieure (7) et
d'au moins un prolongement latéral (13) au-delà de la zone de contact avec la bague intérieure (7), ladite cage (10) étant constituée de métal, par ex. d'aluminium, de cuivre, de laiton.

2. Ensemble de transmission selon la revendication 1,
**caractérisé en ce que** la au moins une cage coaxiale (10) est pourvue de moyens de butée (11) et/ou d'un jonc (12) dans une encoche extérieure radiale de la cage respective (10), lesdits moyens de butée (11) et/ou un jonc (12) étant positionnés pour maintenir la cage respective (10) axialement vis-à-vis de son roulement à rouleaux (4).

3. Ensemble de transmission selon la revendication 2,
**caractérisé en ce que** la au moins une douille intermédiaire (14) est pourvue d'un support pour ladite cage (10) et **en ce que** le au moins un prolongement latéral (13) se projette au-delà de la surface de contact avec la douille (14).

4. Ensemble de transmission selon la revendication 1,
**caractérisé en ce que** la au moins une cage (10) est pourvue de prolongements latéraux (13) de part et d'autre de chaque côté de la bague intérieure (7).

5. Ensemble de transmission selon la revendication 1,
**caractérisé en ce que** la douille (14) est constituée d'un matériau résilient permettant d'atténuer les mouvement relatifs du roulement (4).

6. Ensemble de transmission selon la revendication 1,
**caractérisé en ce que** le au moins prolongement latéral (13) de ladite cage est profilé de façon à avoir une surface extérieure augmentée.

7. Ensemble de transmission selon la revendication 6,
**caractérisé en ce que** la au moins une cage (10) est pourvue d'ailettes (20).
